# EUROPÄISCHE PATENTSCHRIFT

(11) **EP 2 457 432 B1**
(45) Veröffentlichungstag und Bekanntmachung des Hinweises auf die Patenterteilung: **03.12.2014**
(21) Anmeldenummer: 11008990.1
(22) Anmeldetag: 11.11.2011
(51) Int. Cl.: A01D 69/06

(54) **Getriebeanordnung für ein landwirtschaftliches Arbeitsgerät und zugehöriges Arbeitsgerät**
Gear assembly for an agricultural working device and related working device
Agencement d'engrenage pour un appareil de travail agricole et appareil de travail agricole associé

(30) Priorität: 26.11.2010 DE 102010052469
(43) Veröffentlichungstag der Anmeldung: 30.05.2012
(73) Patentinhaber: Rögelberg Holding GmbH & Co. KG, 49716 Meppen (DE)
(72) Erfinder: Seggering, Manfred, 49744 Geeste (DE); Suelmann, Anton, 49716 Meppen (DE); Westerkowsky, Jürgen, 49733 Haren (DE); Pleus, Karlheinz, 49779 Oberlangen (DE)
(74) Vertreter: Wischmeyer, André

(56) Entgegenhaltungen:
- EP-A1- 1 305 997
- EP-A1- 1 849 343
- EP-A2- 2 218 320
- GB-A- 1 421 585

## Beschreibung

Die vorliegende Erfindung betrifft eine Getriebeanordnung für ein landwirtschaftliches Arbeitsgerät, welches einen rotierend anzutreibenden Arbeitsrotor aufweist, insbesondere für einen Ladewagen, der Erntegut wie zum Beispiel Gras, Heu, Stroh oder Rübenblätter aufnehmen und mittels eines als Laderotor ausgebildeten Arbeitsrotors zerkleinern kann, umfassend ein dem Arbeitsrotor vorzuschaltendes Seitengetriebe und insbesondere ein vorzugsweise von einer Zapfwelle antreibbares und dem Seitengetriebe vorgeschaltetes Winkelgetriebe. Des Weiteren betrifft die Erfindung ein landwirtschaftliches Arbeitsgerät, insbesondere einen Ladewagen, der mittels eines als Laderotor ausgebildeten Arbeitsrotors Erntegut zerkleinern kann.

Auf dem Markt sind seit Langem Ladewagen bekannt, die eine von einer Zapfwelle eines Schleppers antreibbare Getriebeanordnung aufweisen, um die zur Aufnahme von Erntegut vom Boden notwendige Pickup sowie des Weiteren einen Laderotor, der der Zerkleinerung des beispielsweise zu Silagezwecken verwendbaren Ernteguts vorgesehen ist, zu betreiben. Die hohe Drehzahl der Zapfwelle des Schleppers von beispielsweise 1000 Umdrehungen pro Minute muss auf dem Weg zum Laderotor übersetzt werden. Hierfür werden im Stand der Technik beispielsweise großvolumig bauende Stirnradwinkelbetriebe verwendet, die die Antriebskraft weiter zu einem ebenfalls breit bauenden Seitengetriebe weiterleiten. Sowohl im Stirnradwinkelgetriebe als auch im Seitengetriebe werden die Drehmomente durch Übersetzung herauf gesetzt, weswegen aufgrund der anliegenden Drehmomente insbesondere das Seitengetriebe ausreichend dimensioniert werden muss. Als Seitengetriebe werden beispielsweise Ketten- oder Stirnradgetriebe verwendet. In Fahrtrichtung beziehungsweise Arbeitsrichtung beispielsweise eines Ladewagens betrachtet bauen diese Getriebe breit, was aufgrund einer maximal zulässigen Straßenbreite für das Arbeitsgerät zu Lasten der Breite des insbesondere seitlich des Seitengetriebes anzuordnenden Laderotors geht. Ein schmalerer Laderotor wiederum ist für die Aufnahme und Zerkleinerung beziehungsweise Weiterleitung des Ernteguts in den Ladewagen hinein nachteilig.

Aus der EP 1 849 343 A1 ist eine Getriebeanordnung angezeigt, bei der ein Planetengetriebe, welches über ein Seitengetriebe angetrieben wird, innerhalb eines Arbeitsrotors angeordnet ist. Der Antrieb des Rotors erfolgt mittelbar über die Planetenträger, wobei zwischen Planetenträger und Rotor eine Federkupplung angeordnet ist, die mit einer Kupplungsscheibe eines Drehmomentbegrenzers verbunden ist.

Es ist Aufgabe der vorliegenden Erfindung, eine gattungsgemäße Getriebeanordnung bzw. ein gattungsgemäßes landwirtschaftliches Arbeitsgerät, insbesondere einen Ladewagen, dergestalt weiterzubilden, dass auf den Arbeitsrotor einwirkende Kräfte zu einem geringeren Verschleiß im Getriebe führen.

Die Aufgabe wird gelöst durch einen Gegenstand gemäß Anspruch 1 sowie durch einen Gegenstand gemäß Anspruch 5. Vorteilhafte Ausgestattungen der Erfindung sind den auf diese Ansprüche rückbezogenen Unteransprüchen sowie der nachfolgenden Beschreibung zu entnehmen.

Erfindungsgemäß ist eine Getriebeanordnung vorgesehen, bei der das Hohlrad oder ein an diesem fixierter Flansch mittels einer formschlüssigen Verbindung zumindest im Wesentlichen, vorzugsweise komplett kipp- und biegemomentfrei mit dem Arbeitsrotor verbindbar ist. Diese Verbindung stellt dann die Koppelung zwischen Hohlrad und Arbeitsrotor bzw. dessen Trommel her. Eine solche Verbindung kann über ein Außenprofil oder eine Verzahnung des Hohlrades oder über Bolzen, Polygone oder in entsprechenden Ausnehmungen des jeweiligen Gegenstücks verlaufende Stifte erfolgen. Das Hohlrad wird dann durch Belastung des Arbeitsrotors seinerseits nicht durch Biege- oder Kippmomente belastet, so dass das Planetengetriebe störungsunanfälliger wird und verschließfreier läuft. Hierbei ist das Hohlrad zur Übertragung eines Drehmoments auf den Arbeitsrotor ausgebildet, gleichzeitig weist die Verbindung jedoch zumindest einen Freiheitsgrad auf, der dem Arbeitsrotor eine Bewegung ohne Rückwirkung auf das Hohlrad ermöglicht.

Insbesondere wird eine solche Ausbildung mit einem Lagerflansch erreicht, der einstückig mit dem Hohlrad verbunden bzw. ausgebildet ist oder an diesem fest angeordnet ist und über den das Hohlrad mittels eines Lagers gelagert ist, wobei dieses Lager gleichzeitig zur Lagerung des Arbeitsrotors verwendbar ist. Hierfür kann das Hohlrad oder ein an diesem fixierter Flansch, der gleichzeitig der Lagerflansch sein kann, insbesondere eine vorzugsweise von einer Längsmittelachse des Planetengetriebes weggerichtete Verzahnung aufweisen, die mit einer Verzahnung eines anzutreibenden Laderotors verbindbar ist. Der Arbeitsrotor kann sich über eine eigene Verzahnung gegen die Verzahnung des Hohlrades sowie das Lager abstützen, die Verzahnung ermöglicht jedoch eine wenn auch geringe Beweglichkeit des Rotors in Richtung dessen Längsmittelachse, die wiederum mit einer zentralen Mittelachse des Planetengetriebes übereinstimmt. Beispielsweise kann es sich hierbei um eine formschlüssige Verbindung über eine Evolventenverzahnung handeln. Insgesamt kann das Planetengetriebe verschleissfreier betrieben werden. Sofern durch Verwindungen der Vorrichtung, beispielsweise der Seitenwände oder des Rahmens, in der Verzahnung Reibung entsteht, können die hierdurch entstehenden Lasten durch das Lager und gegebenenfalls die Zentrierwirkung des Planetengetriebes kompensiert werden. Weiterhin ist vorgesehen, dass dem Seitengetriebe zumindest ein zur Anordnung innerhalb des Arbeitsrotors vorgesehenes und dazu ausgebildetes Planetengetriebe nachgeschaltet ist. Hierdurch wird ein Teil, vorzugsweise ein überwiegender Teil oder Großteil, der notwendigen Übersetzung innerhalb des rotierend anzutreibenden Arbeitsrotors, insbesondere des Laderotors eines Ladewagens, erzielt. In der erfindungsgemäßen Getriebeanordnung können dadurch die Seitengetriebe kleiner und in eine mögliche Fahrtrichtung betrachtet schmaler gebaut werden, da die vom Drehmoment zu übertragenden Drehmomente kleiner sind. Schmalere Seitengetriebe der erfindungsgemäßen Getriebeanordnung wiederum führen bei Ausnutzung einer maximal zulässigen Fahrtbreite zu einer Vergrößerung der möglichen Arbeitsbreite des anzutreibenden Arbeitsrotors, was zugehörige Ladewagen oder andere landwirtschaftliche Arbeitsgeräte effizienter werden lässt.

Vorzugsweise weist der Getriebestrang bis hin zum und ausschließlich des Planetengetriebes ein Übersetzungsverhältnis von kleiner gleich fünf und insbesondere von kleiner gleich 2 auf, so dass der Hauptteil der Übersetzung durch das Planetengetriebe, welches insbesondere zweistufig ausgebildet werden kann, geleitet wird. Durch die Ausbildung des Planetengetriebes zur Anordnung innerhalb eines anzutreibenden Arbeitsrotors kann das Planetengetriebe selbst ausreichend dimensioniert und insbesondere zwei- oder mehrstufig ausgebildet werden. Bei einem mehrstufigen Planetengetriebe kann der Antriebsstrang dann kleinere Übersetzungen oder durchaus eine Übersetzung von 1 aufweisen, was wiederum zu kleiner bauenden Seiten- und/oder Winkelgetrieben führt.

Durch ein erfindungsgemäßes Getriebe ist es somit insbesondere möglich, dass das als Stirnradwinkelgetriebe bekannte Winkelgetriebe eines Ladewagens ersetzt wird durch ein einfaches, lediglich zwei Kegelräder aufweisendes Winkelgetriebe, welches ein oder zwei Abtriebswellen zu den Seiten eines Ladewagens aufweisen kann.

Vorteilhafterweise ist das Seitengetriebe mit einer Zentralwelle versehen, über die unmittelbar ein Sonnenrad des vorzugsweise zweistufigen Planetengetriebes antreibbar ist. Eine zentrale Krafteinleitung der Getriebeanordnung in das Sonnenrad und somit entlang einer Längsmittelachse des Arbeitsrotors vereinfacht den Aufbau des landwirtschaftlichen Arbeitsgeräts durch eine einfache zentrale Krafteinleitung in das Getriebe.

Besonders vorteilhaft ist bei der erfindungsgemäßen Ausbildung, dass das Planetengetriebe zum Abtrieb über sein Hohlrad und zu dessen Koppelung mit dem Arbeitsrotor ausgebildet ist. In einer solchen Ausbildung führt der Kraftfluss im Getriebe auf einfache Weise von der Zentralwelle hin nach außen zum Abtriebsrotor und der den Arbeitsrotor antreibende Teil des Planetengetriebes ist räumlich bereits dicht an dem Arbeitsrotor angeordnet.

In einer weiteren Ausführungsform der Erfindung weist eine erfindungsgemäße Getriebeanordnung zwei Planetengetriebe auf, die zum Antrieb des Arbeitsrotors über ihre Planetenträger oder ihre Hohlräder ausgebildet sind und die zur Anordnung innerhalb des Arbeitsrotors ausgebildet sind. Hierdurch können die Außendurchmesser der Hohlräder der verwendeten Planetengetriebe kleiner sein, was deren Einsetzbarkeit für eine Vielzahl am Markt bekannter Ladewagen gewährleistet.

Vorteilhafterweise kann an dem Hohlrad des Planetengetriebes einer erfindungsgemäßen Getriebeanordnung eine Zugdruckstange angeordnet werden, die sich durch den Arbeitsrotor hindurch erstreckt und an der weiter vom Planetengetriebe entfernten Wand gelagert ist. Hierdurch erfolgt eine Versteifung der oftmals nicht besonders stabil ausgebildeten Seitenwände.

Bei der Verwendung von zwei Planetengetrieben können diese jeweils über ein Seitengetriebe oder über eine gemeinsam zentrale Welle angetrieben werden. Während die Verwendung zweier Seitengetriebe zwar konstruktiv aufwendiger ist und zu Lasten der maximalen Arbeitsbreite des Arbeitsrotors geht, sind bei einer gemeinsamen zentralen Welle Vorkehrungen zu treffen, nach denen die beiden Seitengetriebe exakt gleich laufen, um Spannungen innerhalb des Antriebsrotors beziehungsweise innerhalb der Planetengetriebe zu minimieren oder zu verhindern. Hierfür ist es bei einem weiteren erfindungsgemäßen Ausführungsbeispiel vorgesehen, innerhalb eines Winkelgetriebes der Getriebeanordnung ein Differential vorzusehen, was einen Ausgleich der in die Seitengetriebe eingeleiteten Drehmomente bewirkt.

Die vorstehend beschriebene Aufgabe wird ebenfalls durch ein landwirtschaftliches Arbeitsgerät gelöst, insbesondere durch einen Ladewagen, welches eine vorstehend oder nachfolgend beschriebene Getriebeanordnung aufweist. Dem Arbeitsgerät kommen entsprechend die beschriebenen Vorteile zu. Durch die Verwendung eines innenliegenden Planetengetriebes bauen die Seitengetriebe schmaler, weswegen breitere Rotoren möglich sind. Ein Seitengetriebe, welches beispielsweise als Riemengetriebe, Kettengetriebe, Stirnradgetriebe oder Kegelradgetriebe ausgebildet ist, kann hierbei wie auch ein zugehöriges Winkelgetriebe, neben einem Laderotor zusätzlich zum Antrieb einer Pickup eines Ladewagens ausgebildet sein. Diese oder andere rotierende Trommeln eines landwirtschaftlichen Arbeitsgeräts wie beispielsweise eines Mähdreschers wiederum können erfindungsgemäß ebenfalls ein innenliegendes Planetengetriebe aufweisen, welches Teil einer erfindungsgemäßen Getriebeanordnung ist.

Ein erfindungsgemäßer Ladewagen kann aufgrund der schmaleren Seitengetriebe mit einer in Fahrtrichtung betrachtet breiteren Ladefläche versehen sein.

Bei einem landwirtschaftlichen Arbeitsgerät bei dem beispielsweise der Laderotor eine vorzugsweise zu seiner Drehachse hin gerichtete Verzahnung aufweist, die mit einer Verzahnung des Hohlrads in Eingriff steht, verbleibt das innenliegende Planetengetriebe frei von im Betrieb durch die Verwendung des Arbeitsrotors entstehenden Biege- und Kippmomenten.

Eine besonders kompakte bauende Getriebeanordnung mit einem möglichst breiten Arbeitsrotor ist dann geschaffen, wenn sich Hohlrad und Arbeitsrotor über dasselbe Lager fest abstützen bzw. abstützen können, wobei insbesondere das Lager an einem einen Planetenträger ausbildenden Teil der Getriebeanordnung angeordnet ist. Der den Planetenträger mit ausbildende oder tragende Teil der Getriebeanordnung kann seinerseits dann gehäusefest, beispielsweise an der Ladewagenwand oder an einem Tragrahmen des Ladewagens anzuordnen sein. Anstelle oder ergänzend zu einer Anordnung an dem Planetenträger kann das Lager auch an einem den Planetenträger festlegenden Gehäuseflansch oder anderem gehäusefesten Bauteil der Getriebeanordnung angeordnet sein.

Vorteilhafterweise erstreckt sich der Arbeitsrotor nahezu vollständig entlang eines zwischen zwei seitlichen Ladewänden befindlichen Innenraums und somit über eine Breite von beispielsweise zumindest zwei Metern. Das ist eine im Stand der Technik nicht realisierbare Arbeitsbreite eines Laderotors eines die maximale Straßenfahrbreite von 2,55 m nicht überschreitenden Ladewagens. Vorzugsweise wird das Planetengetriebe hierbei über ein als Stirnradgetriebe ausgebildetes Seitengetriebe angetrieben, welches als flaches Stirnradgetriebe auf der bezüglich des Innenraums anderen Seite der Ladewand angeordnet ist.

In axialer Richtung ist bei einem erfindungsgemäßen landwirtschaftlichen Arbeitsgerät der Arbeitsrotor vorteilhafterweise über ein Lager gelagert und festgelegt, welches sich vom Planetengetriebe aus betrachtet am anderen Ende des Arbeitsrotors befindet.

Bei einer weiteren erfindungsgemäßen Lösung der eingangs gestellten Aufgabe ist anstelle der Abstützung des Arbeitsrotors über eine formschlüssige, gleichzeitig jedoch biege- und kippmomentfreie Verbindung an dem Hohlrad das gesamte Planetengetriebe über seinen Planetenträger oder einen an diesem fixierten Flansch mittels wenigstens einer formschlüssigen Verbindung mit einer Seitenwand oder einem Maschinenrahmen des Arbeitsgeräts lagerbar. Hierdurch ist das gesamte Planetengetriebe an dem Maschinenrahmen mit "Spiel" festgelegt. Durch die stehende Verbindung zwischen dem Planetenträger/Flansch und dem Maschinenrahmen/der Seitenwand ergibt sich nur eine Punktlast in der formschlüssigen Verbindung und eine geringer verschleißbehaftete, umlaufende Last. Es versteht sich, dass hierbei auch die Anbindung des Planetengetriebes an das Seitengetriebe beziehungsweise die Anbindung des Seitengetriebes an den Rest des Antriebsstrangs entsprechend spielbehaftet sein muss.

Zur Verbindung mit der Seitenwand oder dem Maschinenrahmen kann der Planetenträger oder der an diesem fixierte Flansch eine insbesondere von einer Längsmittelachse weggerichtete Verzahnung aufweisen. Hierbei handelt es sich vorzugsweise um eine Evolventenverzahnung, wobei dann entsprechend Seitenwand oder Maschinenrahmen eine zugehörige nach innen gerichtete Evolventenverzahnung aufweisen. Dies kann beispielsweise durch einen innen verzahnten und fest mit dem Maschinenrahmen oder der Seitenwand verbundenen Ring realisiert werden.

In einem solcherart erfindungsgemäßen Ausführungsbeispiel kann das Planetengetriebe dergestalt ausgebildet werden, dass der Arbeitsrotor unmittelbar oder mittelbar über das Hohlrad beziehungsweise einen an diesem befestigten Flansch an dem Planetenträger oder einem diesem zugeordneten Flansch mittels eines Lagers abstützbar ist. Auf ein zusätzliches Lager des Arbeitsrotors auf Seiten des Planetengetriebes kann dann verzichtet werden.

Für eine wirkungsvolle Krafteinleitung und Abstützung am Maschinenrahmen sind die formschlüssige Verbindung des Planetenträgers/des zugehörigen Flansches sowie das Lager zur Abstützung des Hohlrades beziehungsweise des Arbeitsrotors vorteilhafterweise auf einer Senkrechten zu der zentralen Längsmittelachse oder Drehachse des Planetengetriebes. Diese Vorteile kommen auch einem landwirtschaftlichen Gerät zu, welches mit einem vor- oder nachbeschriebenen Getriebe versehen ist.

Weitere Vorteile und Einzelheiten der Erfindung lassen sich der nachfolgenden Figurenbeschreibung entnehmen. In den schematischen Darstellungen der Figuren zeigt:
- Fig. 1:: einen Teil eines erfindungsgemäßen Gegenstands,
- Fig. 2 bis 5:: weitere erfindungsgemäße Ausführungsbeispiele,
- Fig. 6 a) und b):: Detailansichten eines erfindungsgemäßen Gegenstands.
- Fig. 7 a) und b):: Detailansichten eines weiteren erfindungsgemäßen Gegenstands.

Identische oder ähnlich wirkende Teile sind nachfolgend - sofern dienlich mit identischen Ziffern gekennzeichnet. Einzelne Teile der nachfolgend beschriebenen Ausführungsbeispiele können gemeinsam mit vorbeschriebenen technischen Merkmalen ebenfalls zu erfindungsgemäßen Weiterbildungen führen.

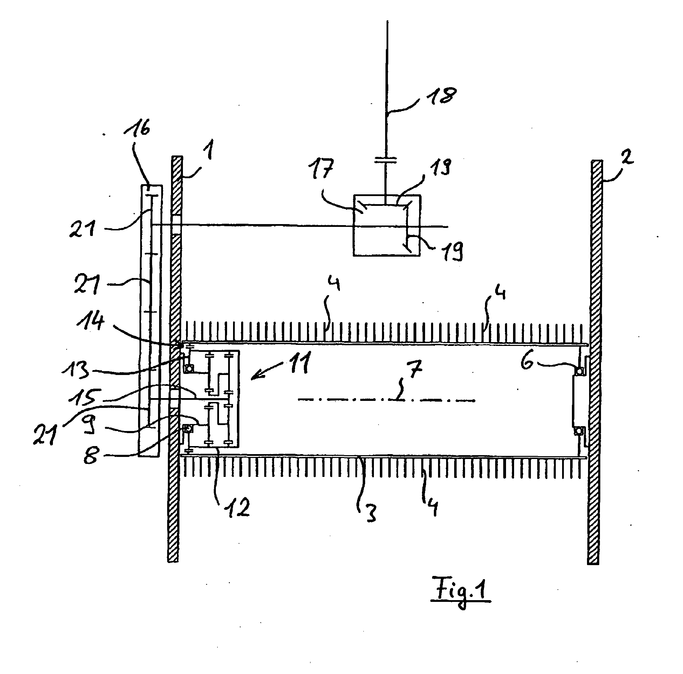

In den Figuren 1 bis 5 sind in schematischer Weise funktionelle Baugruppen eines erfindungemäßen Ladewagens dargestellt. Zwischen zwei Seitenwänden 1 und 2 des Ladewagens, die auch den Aufnahmeraum für Erntegut begrenzen können und/oder Teil der Rahmenkonstruktion des erfindungsgemäßen Ladewagens sein können, ist ein als Laderotor ausgebildeter Arbeitrotor 3 angeordnet. Der Arbeitsrotor 3 weist eine Vielzahl von Schneidmessern 4 auf, über die von einer nicht näher dargestellten Pickup aufgenommenes Erntegut auf seinem Weg in den Laderaum des Ladewagens zerkleinert wird. Der Arbeitsrotor 3 ist in der Grundform hohlzylindrisch ausgeführt und ersteckt sich bis auf die zur Verhinderung von Reibung an den Seiten- bzw. Ladewänden 1 und 2 notwendigen Abstände vollständig zwischen den beiden Seitenwänden durch den von diesen gebildeten Zwischenraum. Typischerweise ist der Laderotor quer zur Fahrtrichtung des Ladewagens angeordnet.

Der Arbeitsrotor 3 ist an der rechten Seitenwand 2 über ein Lager 6 sowohl in Richtung seiner strichpunktiert dargestellten Mittelachse 7 als auch quer dazu abgestützt.

Auf der dem Lager 6 abgewandten Seite des Arbeitsrotors ist der Rotor über einen Lager 8 an einem gehäusefest angeordneten Teil 9 des Planetengetriebes 11 an der Seitenwand 1 gelagert. Ein Hohlrad 12 des zweistufig ausgebildeten Planetengetriebes 11 ist über einen Flansch 13 ebenfalls an dem Lager 8 gelagert. Zwischen dem Flansch 13 und dem Arbeitsrotor 3 befindet sich eine formschlüssige Verbindung 14, die als Evolventenverzahnung ausgebildet ist. Über diese Verbindung wird einerseits das Drehmoment vom Hohlrad 12 auf den Arbeitsrotor 3 übertragen, andererseits stützt sich so der Arbeitsrotor über den Flansch 13 in Richtung der Längsmittelachse 7 ab, die mit der Drehachse einer Zentralwelle 15 übereinstimmt. Aufgrund des Freiheitsgrades der Verzahnung in Richtung längs der Drehachse beziehungsweise Mittelachse 7 werden keine Biege- oder Knickmomente eines sich im Betrieb befindlichen Arbeitsrotors auf das Hohlrad 12 und damit das Planetengetriebe 11 übertragen. Durch eine höhere Laufruhe des Planetengetriebes bei großen Drehzahlen/Drehmomenten kann der Arbeitsrotor wiederum mit höherer Leistung betrieben werden.

Ein flach bauendes, als Stirnradgetriebe ausgebildetes Seitengetriebe 16 überträgt die von einem Winkelgetriebe 17 anliegende Kraft. Das Winkelgetriebe 17 wiederum ist über eine mit einer Zapfwelle eines Schleppers verbundene Welle 18 antreibbar und als einfaches Kegelrad-Winkelgetriebe mit nur zwei Kegelrädern 19 ausgebildet. Sowohl das Kegelradwinkelgetriebe 17, welches das im Stand der Technik bekannte Stirnradwinkelgetriebe ersetzt wie auch das Stirnrad-Seitengetriebe 16 weisen eine Übersetzung von 1 auf. Somit werden über die Kegelräder 19 beziehungsweise Stirnräder 21 des vorzugsweise auch als Aufsteckgetriebe ausbildbaren Seitengetriebes zwar die hohen Drehzahlen der Welle 18 weitergeleitet, dies jedoch bei verhältnismäßig kleinen Drehmomenten. Dies führt zu der vorbeschriebenen kompakten Bauweise der erfindungsgemäßen Getriebeanordnung beziehungsweise zu einem Ladewagen, dessen Rotor 3 entsprechend breit bauen kann. Bereits lediglich fünf Prozent breiter als im Stand der Technik bekannt bauende Arbeitsrotoren führen insbesondere für Lohnunternehmer zu erheblichen Vorteilen im Betrieb.

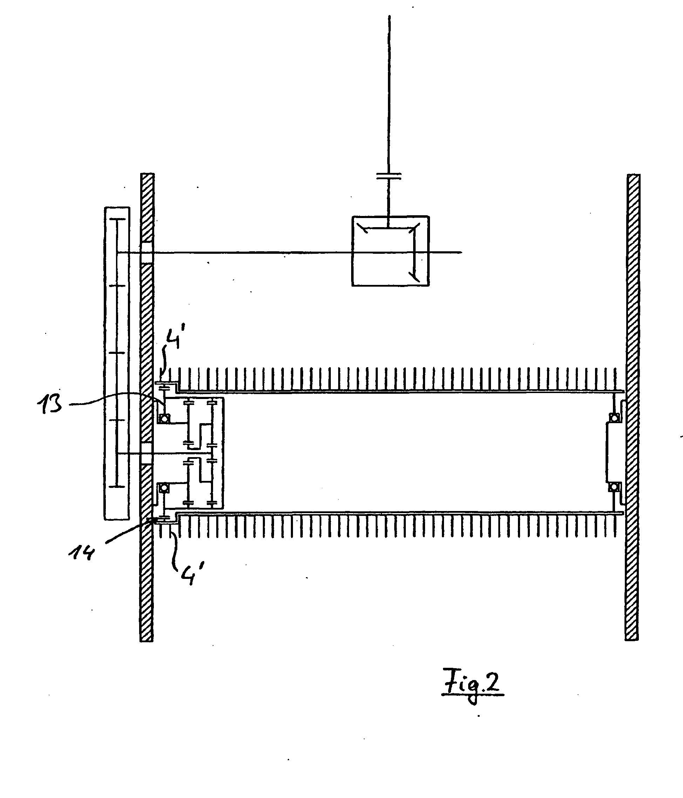

Im Ausführungsbeispiel gemäß Figur 2 ist der Arbeitsrotor nur im Bereich des Flansches 13 und der formschlüssigen Verbindung 14 mit einem größeren Durchmesser versehen, der beispielsweise dem Durchmesser der Ausbildung gemäß Fig. 1 entsprechen kann. Der weitere Durchmesser des Arbeitsrotors kann dann durch eine Abkröpfung kleiner ausbilden, so wiederum entsprechend kleinere Arbeitsrotoren erfindungsgemäß ausbildbar ist. Dies wiegt die Verwendung von in dem Bereich der Verbindung 14 kürzeren Schneidmessern 4' auf.

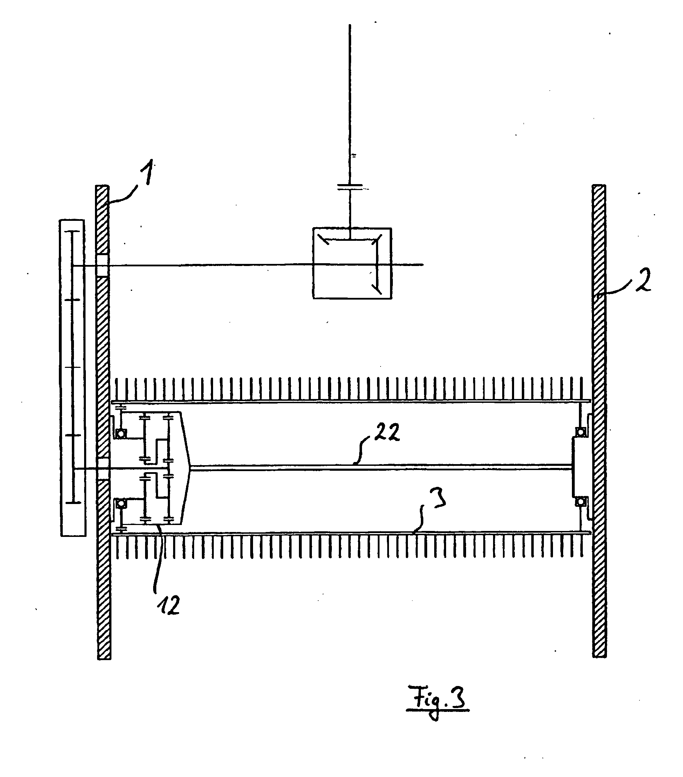

In dem Ausführungsbeispiel gemäß Figur 3 ist an dem Hohlrad 12 einer erfindungsgemäßen Getriebeanordnung eine Zugdruckstange 22 angeordnet, die sich durch den Arbeitsrotor 3 hindurch erstreckt und an der Wand 2 gelagert ist. Hierdurch erfolgt eine Versteifung der oftmals nicht besonders stabil ausgebildeten Seitenwände 1 und 2.

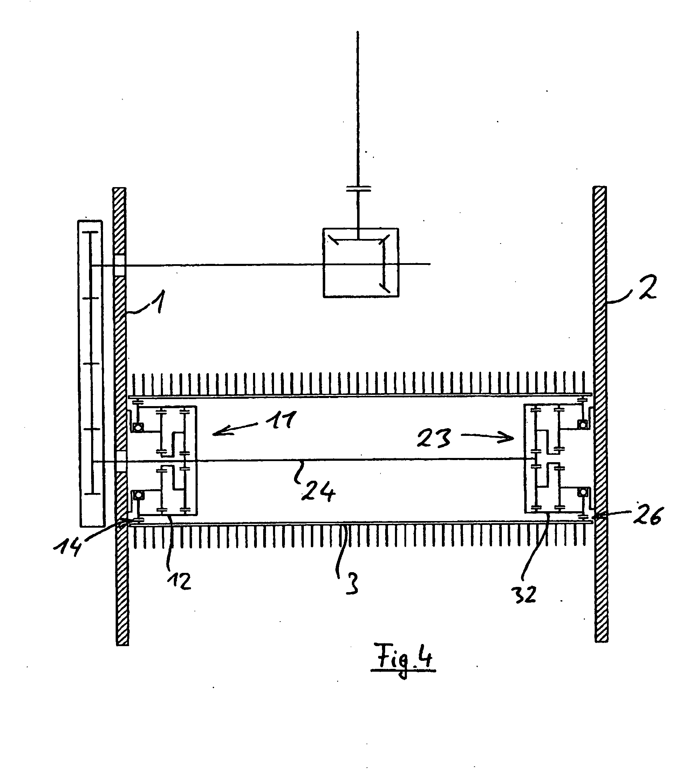

Figur 4 zeigt die Verwendung von zwei Planetengetrieben 11 und 23, die über eine zentrale Welle 24 gemeinsam angetrieben werden. Entsprechend ist der Arbeitsrotor 3 sowohl im Bereich der Seitenwand 1 als auch im Bereich der Seitenwand 2 über eine formschlüssige Verbindung 14 beziehungsweise 26 drehmomentmäßig mit den Hohlrädern 12 und 32 der Planetengetriebe 11 und 23 verbunden.

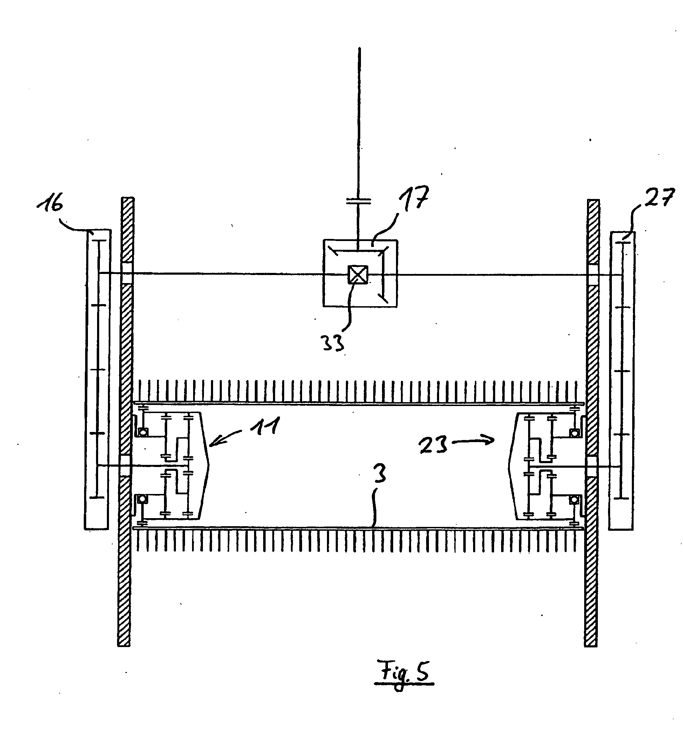

Auch im Ausführungsbeispiel gemäß Figur 5 ist ein erfindungsgemäßer Ladewagen mit zwei in einem Arbeitsrotor 3 angeordneten Planetengetrieben 11 und 23 versehen, diese sind jedoch über nun zwei Seitengetriebe 16 und 27 angetrieben, wobei die beiden Stirnradgetriebe 16 und 27 entsprechend über das Winkelgetriebe 17 angetrieben werden. Um Lastverteilungen gleichmäßig zu gewährleisten, kann das Winkelgetriebe 17 mit einem Differential 33 ausgestattet sein.

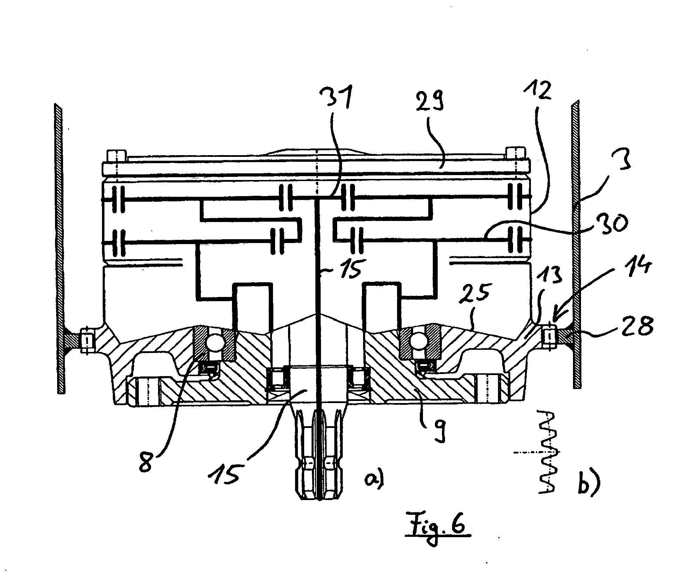

Figur 6 a) zeigt in teils konstruktiv genauerer teils schematischer Ansicht die Integration des Planetengetriebes in dem Arbeitsrotor eines erfindungsgemäßen Ladewagens. Die gezackte Linie 25 bildet den Übergang zwischen genauerer und schematischer Darstellung. Über die Zentralwelle 15 ist ein Sonnenrad 31 des Planetengetriebes 11 antreibbar. Das Hohlrad 12 ist fest mit dem Lagerflansch 13 verbunden, der außenseitig eine formschlüssige Verbindung 14 mit dem Arbeitsrotor 3 herstellt und zur Zentralwelle 15 hin über ein Lager 8 gelagert ist. Hierzu ist auf der Innenseite des eine hohlzylindrische Grundform aufweisenden Arbeitsrotors 3 ein Kranz 28 mit einer innenliegenden Evolventenverzahnung angeschweißt. In der Figur 6 b) ist die Außenverzahnung des Flansches 13 gezeigt, die auf einfache Weise und mit der erforderlichen Genauigkeit durch einen Laserschnitt hergestellt wird. Die formschlüssige Verbindung 14 kann ungeachtet der vorteilhaften und dargestellten Verbindung auch durch andere Typen von Verbindungen realisiert werden.

Durch den Lagerflansch 13 kann gleichzeitig der Getriebeinnenraum des Planetengetriebes abgedichtet werden, wozu auf der in der in der Figur 6 a) oben liegenden Seite ein Deckel 29 zusätzlich verwendet wird. Auch hierdurch ist wieder der kompakte platzsparende Aufbau des Planetengetriebes erkennbar. Gehäuse- beziehungsweise seitenwandfest ist das Teil 9 des Getriebes anzuordnen, welches gleichzeitig auch ein Planetenträger für die Planetenräder 30 ausbildet.

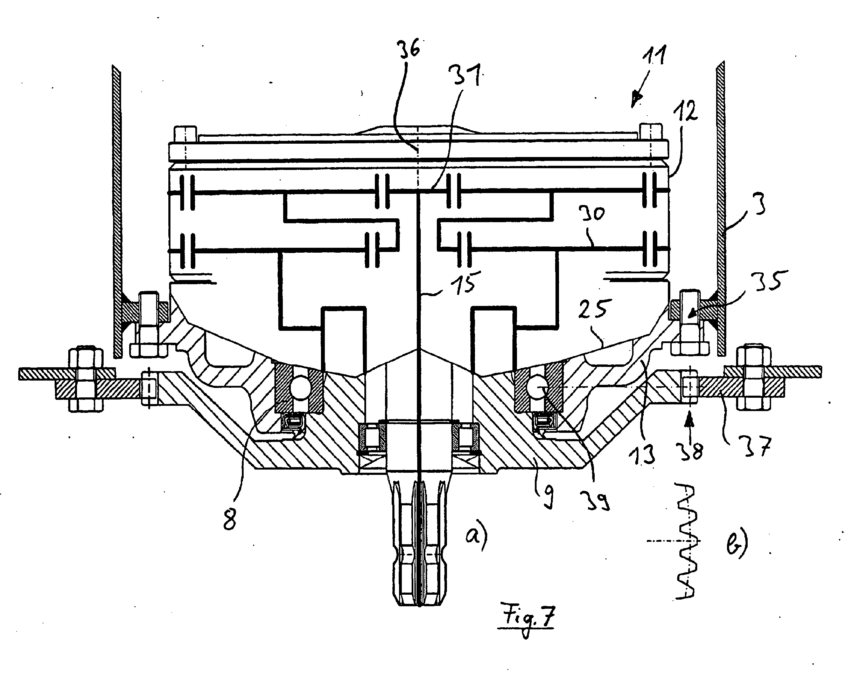

Figur 7 a) zeigt in einer zu Figur 6 identischen Ansicht die Integration des Planetengetriebes in dem Arbeitsrotor 3 eines weiteren erfindungsgemäßen Ladewagens. Auch hier bildet die gezackte Linie 25 wieder den Übergang zwischen genauerer und nur schematischer Darstellung. Über die Zentralwelle 15 ist ein Sonnenrad 31 des zweistufigen Planetengetriebes 11 antreibbar. Das Hohlrad 12 ist wiederum fest mit dem Lagerflansch 13 verbunden, wobei nun dieser Flansch 13 seinerseits mit dem Arbeitsrotor 3 fest verbunden ist. Hierbei kann es sich beispielsweise um eine Verschraubung 35 handeln.

Innenseitig ist der Flansch 13 zur Zentralwelle 15 hin, die gleichzeitig auch eine zentrale Drehachse 36 aufweist, über das Lager 8 gelagert. Dieses Lager 8 stützt sich nun auf dem Planetenträger beziehungsweise einem mit diesem fest verbundenen Flansch 9 des Planetengetriebes 11 ab. Der Arbeitsrotor 3 ist mithin auf diesem Flansch 9 gelagert, welcher seinerseits zum Ausgleich von Kipp- und/oder Biegemomenten formschlüssig (Verbindung 38) jedoch beweglich an der Seitenwand beziehungsweise dem Maschinenrahmen gelagert ist. Hierzu weist die Seitenwand oder auch der Maschinenrahmen einem innenverzahnten Ring 37 mit Evolventenverzahnung (vergleiche Figur 7 b)) auf. Eine entsprechende Verzahnung, jedoch außen liegend, weist der Flansch 9 auf.

In dem Ausführungsbeispiel der Fig. 7 ist somit das gesamte zweistufige Planetengetriebe beweglich gegenüber der Seitenwand befestigt. Es handelt sich um eine kupplungsähnliche Abstützung, die Schiefstellungen ausgleichen kann und eine Drehmomentabstützung darstellt. Hierbei können Drehmoment und Radialkräfte auch über mehr als ein Mittel abgestützt werden. Besonders vorteilhaft ist die Anordnung dann, wenn die formschlüssige Verbindung 38 zur verbesserten Einleitung von Kräften in die Seitenwand oder den Maschinenrahmen gemeinsam mit dem Lager 8 auf einer Senkrechten 39 zur Längsmittelachse beziehungsweise zentralen Drehachse 36 des Getriebes liegen.

## Patentansprüche

1. Getriebeanordnung für ein landwirtschaftliches Arbeitsgerät, welches einen rotierend anzutreibenden Arbeitsrotor (3) aufweist, insbesondere für einen Ladewagen, der Erntegut wie z.B. Gras, Heu, Stroh oder Rübenblätter aufnehmen und mittels des als Laderotor ausgebildeten Arbeitsrotors (3) zerkleinern kann, umfassend ein dem Arbeitsrotor (3) vorzuschaltendes Seitengetriebe (16) und insbesondere ein vorzugsweise von einer Zapfwelle antreibbares und dem Seitengetriebe (16) vorgeschaltetes Winkelgetriebe (17), wobei dem Seitengetriebe (16) zumindest ein zur Anordnung innerhalb des Arbeitsrotors vorgesehenes Planetengetriebe (11) nachgeschaltet ist, **dadurch gekennzeichnet, dass** das Planetengetriebe (11) zum Abtrieb über sein Hohlrad (12) und zur Koppelung desselben mit dem Arbeitsrotor (3) ausgebildet ist, wobei das Hohlrad (12) oder ein an diesem fixierter Flansch (13) mittels einer formschlüssigen Verbindung (14) zumindest im Wesentlichen kipp- und biegemomentfrei mit dem Arbeitsrotor verbindbar ist.

2. Getriebeanordnung nach Anspruch 1, **dadurch gekennzeichnet, dass** das Seitengetriebe (16) eine Zentralwelle (15) aufweist, über die unmittelbar ein Sonnenrad (31) des vorzugsweise zweistufigen Planetengetriebes (11) antreibbar ist.

3. Getriebeanordnung nach Anspruch 1 oder 2, **dadurch gekennzeichnet, dass** das Hohlrad (12) oder ein an diesem fixierter Flansch (13) eine insbesondere von einer Längsmittelachse (7) weggerichtete Verzahnung aufweist.

4. Getriebeanordnung nach einem der Ansprüche 1 bis 3, **dadurch gekennzeichnet, dass** das Hohlrad (12) einen Lagerflansch (13) umfasst, über den das Hohlrad (12) mittels eines Lagers (8) gelagert ist und über den gleichzeitig der Arbeitsrotor (3) lagerbar ist.

5. Getriebeanordnung für ein landwirtschaftliches Arbeitsgerät, welches einen rotierend anzutreibenden Arbeitsrotor (3) aufweist, insbesondere für einen Ladewagen, der Erntegut wie z.B. Gras, Heu, Stroh oder Rübenblätter aufnehmen und mittels des als Laderotor ausgebildeten Arbeitsrotors (3) zerkleinern kann, umfassend ein dem Arbeitsrotor vorzuschaltendes Seitengetriebe (16) und insbesondere ein vorzugsweise von einer Zapfwelle antreibbares und dem Seitengetriebe (16) vorgeschaltetes Winkelgetriebe (17), wobei dem Seitengetriebe (16) zumindest ein zur Anordnung innerhalb des Arbeitsrotors vorgesehenes Planetengetriebe (11) nachgeschaltet ist, **dadurch gekennzeichnet, dass** das Planetengetriebe (11) zum Abtrieb über sein Hohlrad (12) und zur Koppelung desselben mit dem Arbeitsrotor (3) ausgebildet ist, wobei zumindest ein Planetenträger (30) oder ein an diesem fixierter Flansch (9) mittels wenigstens einer formschlüssigen Verbindung (38) zumindest im Wesentlichen kipp- und biegemomentfrei mit einer Seitenwand oder einem Maschinenrahmen des Arbeitsgeräts verbindbar ist.

6. Getriebeanordnung nach Anspruch 5, **dadurch gekennzeichnet, dass** zur Verbindung mit der Seitenwand oder dem Maschinenrahmen der Planetenträger (30) oder der an diesem fixierte Flansch (9) eine insbesondere von einer Längsmittelachse (36) weggerichtete Verzahnung aufweist.

7. Getriebeanordnung nach Anspruch 5 oder 6, **dadurch gekennzeichnet, dass** der Arbeitsrotor an einem an dem Planetenträger oder einem zugehörigen Flansch abgestützten Lager (8) lagerbar ist, wobei insbesondere der Arbeitsrotor (3) unmittelbar an dem Hohlrad (12) oder an einem an diesem angeordneten Flansch (13) fixierbar ist.

8. Getriebeanordnung nach Anspruch 7, **dadurch gekennzeichnet, dass** die Verbindung (38) und das Lager (8) zur verbesserten Einleitung von Kräften in die Seitenwand oder den Maschinenrahmen auf einer Senkrechten (39) zur Längsmittelachse des Getriebes liegen.

9. Getriebeanordnung nach einem der Ansprüche 5 bis 8, **dadurch gekennzeichnet, dass** das Seitengetriebe (16) eine Zentralwelle (15) aufweist, über die unmittelbar ein Sonnenrad (31) des vorzugsweise zweistufigen Planetengetriebes antreibbar ist.

10. Getriebeanordnung nach einem der vorherigen Ansprüche, **gekennzeichnet durch** zwei Planetengetriebe (11, 23), die zum Antrieb des Arbeitsrotors (3) über ihre Planetenträger oder ihre Hohlräder (12, 32) ausgebildet sind, wobei insbesondere beide Planetengetriebe (11, 23) über jeweils ein Seitengetriebe (16, 27) oder über eine gemeinsame zentrale Welle (24) antreibbar sind.

11. Getriebeanordnung nach einem der vorhergehenden Ansprüche, **dadurch gekennzeichnet, dass** das Übersetzungsverhältnis von Seiten- und Winkelgetriebe (16, 17) kleiner gleich 5 und insbesondere kleiner gleich 2 ist.

12. Landwirtschaftliches Arbeitsgerät, insbesondere Ladewagen, **gekennzeichnet durch** eine Getriebeanordnung nach einem der vorherigen Ansprüche.

13. Landwirtschaftliches Arbeitsgerät nach Anspruch 12 und unter Einschluss zumindest eines der Ansprüche 1 bis 4, **dadurch gekennzeichnet, dass** der Arbeitsrotor (3) eine vorzugsweise zu seiner Drehachse (7) hingerichtete Verzahnung aufweist, die mit einer Verzahnung des Hohlrades (12) in Eingriff steht.

14. Landwirtschaftliches Arbeitsgerät nach Anspruch 12 und unter Einschluss zumindest eines der Ansprüche 5 bis 9, **dadurch gekennzeichnet, dass** der Maschinenrahmen oder die Seitenwand eine vorzugsweise zu der Drehachse (36) des Arbeitsrotors (3) hingerichtete Verzahnung aufweist, die mit einer Verzahnung des Planetenträgers (30) oder eines an diesem fixierten Flansches (9) in Eingriff steht.

15. Landwirtschaftliches Arbeitsgerät nach einem der beiden Ansprüche 12 oder 13 sowie unter Einschluss von Anspruch 4, **dadurch gekennzeichnet, dass** das Hohlrad (12) und der Arbeitsrotor (3) über dasselbe Lager (8) gehäusefest abgestützt sind, wobei insbesondere das Lager (8) an einem einen Planetenträger ausbildenden Teil der Getriebeanordnung und/oder an einem mit diesem verbundenen gehäusefesten Bauteil (9) angeordnet ist.

16. Landwirtschaftliches Arbeitsgerät nach einem der Ansprüche 12 oder 14 und unter Einschluss von Anspruch 7, **dadurch gekennzeichnet, dass** der Arbeitsrotor (3) auf dem Planetenträger (30) oder einem mit diesem verbundenen Flansch (9) abgestützt ist, wobei dieser Planetenträger (30) oder Flansch (9) zum Ausgleich von Kipp- und Biegemomenten beweglich an der Seitenwand oder dem Maschinenrahmen gelagert ist.

17. Landwirtschaftliches Arbeitsgerät nach einem der Ansprüche 12 bis 16, **dadurch gekennzeichnet, dass** sich der Arbeitsrotor (3) entlang eines zwischen zwei seitlichen Ladewänden (1, 2) befindlichen-Innenraums erstreckt und über ein vorzugsweise als Stirnradgetriebe ausgebildetes Seitengetriebe (16) antreibbar ist, welches bezüglich des Innenraums auf der anderen Seite der Ladewände (1, 2) angeordnet ist.

## Claims

1. Gear assembly for an agricultural working device which comprises a working rotor (3) which is to be rotatably driven, in particular for a self-loading forage wagon which receives crops such as grass, hay, straw or beet leaves and can shred said crops by means of the working rotor (3) formed as a loading rotor, comprising a side gear (16) that is to be arranged upstream of the working rotor (3), and in particular an angular gear (17) that is preferably arranged upstream of the side gear (16) and can be driven by a power take-off shaft, at least one planetary gear train (11) that is provided to be arranged within the working rotor being arranged downstream of the side gear (16), **characterised in that** the planetary gear train (11) is configured to output via its internal gear (12) and to couple said gear to the working rotor (3), it being possible for the internal gear (12) or a flange (13) fixed thereto to be connected to the working rotor in a manner which is at least substantially free of tilting and bending moments by means of an interlocking connection (14).

2. Gear assembly according to claim 1, **characterised in that** the side gear (16) comprises a central shaft (15), via which a sun wheel (31) of the preferably two-stage planetary gear train (11) can be directly driven.

3. Gear assembly according to either claim 1 or claim 2, **characterised in that** the internal gear (12) or a flange (13) fixed thereto comprises teeth which in particular point away from a longitudinal central axis (7).

4. Gear assembly according to any of claims 1 to 3, **characterised in that** the internal gear (12) comprises a bearing flange (13), via which the internal gear (12) is mounted by means of a bearing (8) and via which the working rotor (3) can be mounted at the same time.

5. Gear assembly for an agricultural working device which comprises a working rotor (3) which is to be rotatably driven, in particular for a self-loading forage wagon which receives crops such as grass, hay, straw or beet leaves and can shred said crops by means of the working rotor (3) formed as a loading rotor, comprising a side gear (16) that is to be arranged upstream of the working rotor, and in particular an angular gear (17) that is preferably arranged upstream of the side gear (16) and can be driven by a power take-off shaft, at least one planetary gear train (11) that is provided to be arranged within the working rotor being arranged downstream of the side gear (16), **characterised in that** the planetary gear train (11) is configured to output via its internal gear (12) and to couple said gear to the working rotor (3), it being possible for at least one planet carrier (30) or a flange (9) fixed thereto to be connected to a side wall or a machine frame of the working device in a manner which is at least substantially free of tilting and bending moments by means of an interlocking connection (38).

6. Gear assembly according to claim 5, **characterised in that** the planet carrier (30) or the flange (9) fixed thereto comprises teeth which in particular point away from a longitudinal central axis (36) for connecting to the side wall or the machine frame.

7. Gear assembly according to either claim 5 or claim 6, **characterised in that** the working rotor can be mounted on a bearing (8) supported on the planet carrier or an associated flange, it being possible in particular for the working rotor (3) to be directly fixed to the internal gear (12) or to a flange (13) arranged thereon.

8. Gear assembly according to claim 7, **characterised in that** the connection (38) and the bearing (8) lie on a line (39) perpendicular to the longitudinal central axis of the gear for the improved transmission of forces into the side wall or the machine frame.

9. Gear assembly according to any of claims 5 to 8, **characterised in that** the side gear (16) comprises a central shaft (15), via which a sun wheel (31) of the preferably two-stage planetary gear train can be directly driven.

10. Gear assembly according to any of the preceding claims, **characterised by** two planetary gear trains (11, 23) which are configured to drive the working rotor (3) via its planet carriers or its internal gears (12, 32), it being possible in particular for both planetary gear trains (11, 23) to be driven by one side gear (16, 27) respectively or by one common central shaft (24).

11. Gear assembly according to any of the preceding claims, **characterised in that** the gear ratio of the side gear (16) and the angular gear (17) is less than or equal to 5 and in particular less than or equal to 2.

12. Agricultural working device, in particular a self-loading forage wagon, **characterised by** a gear assembly according to any of the preceding claims.

13. Agricultural working device according to claim 12, and including at least one of claims 1 to 4, **characterised in that** the working rotor (3) comprises teeth which are preferably directed towards the rotational axis (7) of said rotor and are engaged with teeth on the internal gear (12).

14. Agricultural working device according to claim 12 and including at least one of claims 5 to 9, **characterised in that** the machine frame or the side wall comprises teeth which are preferably directed towards the rotational axis (36) of the working rotor (3) and are engaged with teeth on the planet carrier (30) or on a flange (8) fixed thereto.

15. Agricultural working device according to either claim 12 or claim 13 and including claim 4, **characterised in that** the internal gear (12) and the working rotor (3) are supported via the same bearing (8) so as to be fixed in the housing, the bearing (8) in particular being arranged on a part of the gear assembly forming a planet carrier and/or on a component (9) that is connected to said part so as to be fixed in the housing.

16. Agricultural working device according to either claim 12 or claim 14 and including claim 7, **characterised in that** the working rotor (3) is supported on the planet carrier (30) or a flange (9) connected thereto, said planet carrier (30) or flange (9) being movably mounted on the side wall or the machine frame for compensating tilting and bending moments.

17. Agricultural working device according to any of claims 12 to 16, **characterised in that** the working rotor (3) extends along an internal space between two lateral loading walls (1, 2) and can be driven via a side gear (16) which is preferably formed as a spur gear and is arranged on the other side of the loading wall (1, 2) with respect to the internal space.

## Revendications

1. Agencement d'engrenage pour un appareil de travail agricole qui présente un rotor de travail (3) à entraîner en rotation, en particulier pour un chargeur qui peut recevoir des produits de récolte tels que de l'herbe, du foin, de la paille ou des feuilles de betteraves et les broyer à l'aide du rotor de travail (3) réalisé comme un rotor de chargement, comprenant un engrenage latéral (16) à monter en amont du rotor de travail (3) et en particulier un engrenage angulaire (17) entraînable de préférence par un arbre de prise de force et monté en amont de l'engrenage latéral (16), au moins un engrenage planétaire (11) prévu pour l'agencement dans le rotor de travail étant monté en aval de l'engrenage latéral (16), **caractérisé en ce que** l'engrenage planétaire (11) est réalisé pour l'entraînement par sa roue creuse (12) et pour le couplage de celle-ci avec le rotor de travail (3), la roue creuse (12) ou une bride (13) fixée sur celle-ci pouvant être reliée à l'aide d'une liaison à complémentarité de formes (14) au moins sensiblement sans couple de renversement et de flexion au rotor de travail.

2. Agencement d'engrenage selon la revendication 1, **caractérisé en ce que** l'engrenage latéral (16) présente un arbre central (15), par lequel une roue solaire (31) de l'engrenage planétaire (11) de préférence à deux étages peut être directement entraînée.

3. Agencement d'engrenage selon la revendication 1 ou 2, **caractérisé en ce que** la roue creuse (12) ou une bride (13) fixée sur celle-ci présente une denture éloignée en particulier d'un axe médian longitudinal (7).

4. Agencement d'engrenage selon l'une quelconque des revendications 1 à 3, **caractérisé en ce que** la roue creuse (12) comporte une bride de palier (13) par laquelle la roue creuse (12) est logée à l'aide d'un palier (8) et par laquelle le rotor de travail (3) peut être logé simultanément.

5. Agencement d'engrenage pour un appareil de travail agricole qui présente un rotor de travail (3) à entraîner en rotation, en particulier pour un chargeur qui peut recevoir des produits de récolte tels que de l'herbe, du foin, de la paille ou des feuilles de betteraves et les broyer à l'aide du rotor de travail (3) réalisé comme un rotor de chargement, comprenant un engrenage latéral (16) à monter en amont du rotor de travail (3) et en particulier un engrenage angulaire (17) entraînable de préférence par un arbre de prise de force et monté en amont de l'engrenage latéral (16), au moins un engrenage planétaire (11) prévu pour l'agencement dans le rotor de travail étant monté en aval de l'engrenage latéral (16), **caractérisé en ce que** l'engrenage planétaire (11) est réalisé pour l'entraînement par sa roue creuse (12) et pour le couplage de celle-ci avec le rotor de travail (3), au moins un support planétaire (30) ou une bride (9) fixée sur celui-ci pouvant être relié à l'aide d'une liaison à complémentarité de formes (38) au moins sensiblement sans couple de renversement et de flexion à une paroi latérale ou à un bâti de machine de l'appareil de travail.

6. Agencement d'engrenage selon la revendication 5, **caractérisé en ce que** pour la liaison avec la paroi latérale ou le bâti de machine, le support planétaire (30) ou la bride (9) fixée sur celui-ci présente une denture éloignée en particulier d'un axe médian longitudinal (36).

7. Agencement d'engrenage selon la revendication 5 ou 6, **caractérisé en ce que** le rotor de travail peut être logé sur un palier (8) en appui contre le support planétaire ou une bride afférente, en particulier le rotor de travail (3) pouvant être fixé directement sur la roue creuse (12) ou sur une bride (13) agencée sur celle-ci.

8. Agencement d'engrenage selon la revendication 7, **caractérisé en ce que** la liaison (38) et le palier (8) se trouvent pour l'introduction améliorée de forces dans la paroi latérale ou le bâti de machine sur une perpendiculaire (39) par rapport à l'axe médian longitudinal de l'engrenage.

9. Agencement d'engrenage selon l'une quelconque des revendications 5 à 8, **caractérisé en ce que** l'engrenage latéral (16) présente un arbre central (15), par lequel une roue solaire (31) de l'engrenage planétaire de préférence à deux étages peut être directement entraînée.

10. Agencement d'engrenage selon l'une quelconque des revendications précédentes, **caractérisé par** deux engrenages planétaires (11, 23) qui sont réalisés pour l'entraînement du rotor de travail (3) par le biais de leurs supports planétaires ou leurs roues creuses (12, 32), en particulier les deux engrenages planétaires (11, 23) pouvant être entraînés par respectivement un engrenage latéral (16, 27) ou par un arbre central commun (24).

11. Agencement d'engrenage selon l'une quelconque des revendications précédentes, **caractérisé en ce que** le rapport de transmission entre l'engrenage latéral et angulaire (16, 17) est inférieur ou égal à 5 et en particulier inférieur ou égal à 2.

12. Appareil de travail agricole, en particulier chargeur, **caractérisé par** un agencement d'engrenage selon l'une quelconque des revendications précédentes.

13. Appareil de travail agricole selon la revendication 12 et en intégrant au moins l'une quelconque des revendications 1 à 4, **caractérisé en ce que** le rotor de travail (3) présente une denture dirigée de préférence vers son axe de rotation (7) qui est en engagement avec une denture de la roue creuse (12).

14. Appareil de travail agricole selon la revendication 12 et en intégrant au moins l'une quelconque des revendications 5 à 9, **caractérisé en ce que** le bâti de machine ou la paroi latérale présente une denture dirigée de préférence vers l'axe de rotation (36) du rotor de travail (3), qui est en engagement avec une denture du support planétaire (30) ou d'une bride (9) fixée sur celui-ci.

15. Appareil de travail agricole selon l'une quelconque des deux revendications 12 ou 13 et en intégrant la revendication 4, **caractérisé en ce que** la roue creuse (12) et le rotor de travail (3) sont en appui en étant fixés au boîtier par le même palier (8), en particulier le palier (8) étant disposé sur une partie réalisant un support planétaire de l'agencement d'engrenage et/ou sur un composant (9) fixé au boîtier relié à celui-ci.

16. Appareil de travail agricole selon l'une quelconque des revendications 12 ou 14 et en intégrant la revendication 7, **caractérisé en ce que** le rotor de travail (3) est en appui sur le support planétaire (30) ou une bride (9) reliée à celui-ci, ce support planétaire (30) ou la bride (9) étant logée pour la compensation de couples de renversement et de flexion de manière mobile sur la paroi latérale ou le bâti de machine.

17. Appareil de travail agricole selon l'une quelconque des revendications 12 à 16, **caractérisé en ce que** le rotor de travail (3) s'étend le long d'un espace intérieur se trouvant entre deux parois de chargement latérales (1, 2) et peut être entraîné par un engrenage latéral (16) réalisé de préférence comme un engrenage à roue droite qui est agencé par rapport à l'espace intérieur de l'autre côté des parois de chargement (1, 2).
